# EUROPEAN PATENT APPLICATION

(11) **EP 2 362 573 A1**
(43) Date of publication of application: **31.08.2011**
(21) Application number: 10154173.8
(22) Date of filing: 19.02.2010
(51) Int. Cl.: H04L 9/08, G06F 21/00, H04N 5/00, H04N 7/16

(54) **Device and method for establishing secure trust key**

(71) Applicant: Irdeto B.V., 2132 HD Hoofddorp (NL)
(72) Inventor: Curtin, Bruce Victor, 2024 XB Haarlem (NL); Hoogenboom, Ronaldus Petrus Johannes, 2377 DX Oude Wetering (NL)
(74) Representative: van Looijengoed, Ferry Antoin Theodorus

(57) **Abstract**

The invention relates to an electronic device configured for encrypted data transfer with a smart card under a trust key. The device comprises at least one secured portion, wherein the device is configured for performing a key exchange algorithm with the smart card for establishing the trust key for the encrypted data transfer between the device and the smart card and wherein the device is configured for storing the trust key in the secured portion of the device.

## Description

### FIELD OF THE INVENTION

The invention relates to the establishment of a secure trust key for securing data transfer between a device and a smart card. More specifically, the invention relates to the establishment of a secure trust key in a device and a smart card for secure data transfer using a key-exchange algorithm.

### BACKGROUND OF THE INVENTION

Conditional access systems for digital video broadcast (DVB) transmissions are well known and widely used in conjunction with pay television services. Such systems provide secure transmission of a broadcast stream comprising one or more services to a digital receiver contained for example in a set-top box or a mobile terminal supporting broadcast services. To protect the broadcast services from unauthorized viewing, the data packets are scrambled (encrypted) at the transmitter side with an encryption key commonly referred to as a control word. Further security is provided by periodically changing the control words so they are only valid for a certain period. Typically control words are transmitted in encrypted form to the receiver using so-called entitlement control messages (ECMs).

In the receiver an ECM is filtered out of a transport stream and sent to a secure computing environment, e.g. a smart card. The smart card subsequently decrypts the ECM using a higher-level key, which is common to all smart cards that are authorised to receive the TV channels associated with that key. The control word is returned to the receiver, which immediately loads the control word into the descrambler for descrambling data.

The transmission of control words from the smart card to the receiver is vulnerable to interception of the control word on the interface between the smart card and the receiver. Control word piracy is a significant problem in digital video broadcasting (DVB) systems. Sometimes attackers are able to intercept a control word CW that is transmitted from the smartcard to the receiver and redistribute it over local wireless networks or over the internet. The redistributed control word is then used to descramble the scrambled services without a legitimate smartcard. In order to complicate control word piracy, it is known that the smart card and receiver use a chip set session key CSSK for encrypting the stream of control words on the interface between the smart card and the receiver.

Currently, the smart card is pre-provisioned with a unique serial number and a unique key and the chip set of the receiver is also pre-provisioned with a chip set serial number CSSN. Moreover, a chip set unique key CSUK is stored in a secured portion of the receiver, and CSSN and CSUK are linked. CSSN and CSUK cannot be changed after being provisioned in the receiver. Key CSUK is not stored in the smart card.

The establishment of the session key CSSK for data transfer between the smart card and the receiver is problematic to some extent. Before a customer can use a smart card - receiver combination, he or she is obliged to contact a party and provide information regarding the serial number of the smart card and the serial number of the chip set to this party. This information enables the contacted party to initiate the transmission of a message (typically an entitlement management message EMM) encrypted under the unique key of the smart card and containing the key CSSK and the key CSSK encrypted under the chip set unique key CSUK. The smart card receiving the encrypted message decrypts the message using the unique key of the smart card and now possesses the key CSSK. The smart card also loads the key CSSK encrypted under CSUK in the secured portion of the receiver, where it is decrypted using CSUK, such that CSSK is also available at the receiver. Subsequently, control words can be transferred over the interface from the smart card to the receiver, the control words being encrypted at the smart card and decrypted in the secured portion of the receiver under the obtained key CSSK.

There is a need in the art for secure data transfer between a device and a smart card that can be achieved in a less complex manner.

### SUMMARY OF THE INVENTION

An electronic device, such as a receiver of set-top box or a mobile device, configured for encrypted data transfer with a smart card under a trust key is disclosed. The electronic device comprises at least one secured portion. As used herein, a secured portion is a dedicated part of the device containing hardware elements not allowing access by means of read/write operations of data from outside the secured portion and only allowing data transfer with non-secured portions of the receiver in encrypted form. An example of a secured portion is a secured crypto-engine. Functions realized in the secured portion are also generally implemented as hardware elements.

The smartcard is typically a separate card that is or can be manually inserted into the receiver before operation. However, the smart card can also be an integrated part of the electronic device.

The electronic device is configured for performing a key exchange algorithm with the smart card for establishing the trust key for the encrypted data transfer between the device and the smart card. The device is configured for storing the established trust key in the secured portion of the device.

A method for establishing a trust key between a device and a smart card, wherein the device comprises such a secured portion is also disclosed. The method comprises the steps of performing a key exchange algorithm between the device and the smart card to obtain the trust key in the device and the smart card and storing the trust key in the secured portion of the device. Data may now be encrypted in the smart card under the trust key and directly transferred to the secured portion of the device, where it can be decrypted using the trust key stored in the secured portion.

The key exchange algorithm functionality, e.g. a Diffie-Hellman protocol, implemented in the electronic device and the smart card, enables the smart card and the electronic device to locally agree on the trust key once the smart card and the electronic device are brought into operative contact without the need for contacting another party. The trust key can be used for secure transfer of data (e.g. control words) between a smart card and a receiver by encryption under the trust key. By storing the trust key in a secured portion of the device, data from the smart card can be transferred, encrypted under the trust key, from the smart card directly into the secured portion of the electronic device without being exposed in unencrypted form in the non-secured portion(s) of the device. Since access to the secured portion of the device is virtually impossible, the trust key cannot be obtained from the device and data, such as control words, can be safely transferred to this secure portion under the trust key.

Key exchange algorithms are described in the book Applied Cryptography, ISBNO-471-12845-7, by Bruce Schneier. It should be acknowledged that the key exchange algorithm steps may be preceded by or combined with certificate verification steps between the smart card and the electronic device. As an example, Diffie-Helman public keys can be exchanged between the smart card and the secure device in combination with certificate verification steps.

In an embodiment of the invention, the secured portion of the device is configured for performing at least a portion of the key exchange algorithm. This embodiment has the advantage that the storage of the trust key in the secure portion resulting from the execution of the key exchange algorithm can be done without further measures as the trust key is obtained within the secured portion. The key exchange algorithm operations are implemented using hardware elements.

In an embodiment of the invention, the device comprises at least one non-secured portion. The non-secured portion comprises e.g. firmware of the device allowing external read/write operations.

The non-secured portion may also comprise a processor with on-chip memory, allowing read/write operations on the on-chip memory by loading software in the processor.

The non-secured portion is configured for performing the key exchange algorithm part for the device in a software module. This embodiment has the advantage that the secured portion(s) should not be configured with dedicated hardware elements for performing key exchange algorithm operations. In order to allow safe storage of the resulting trust key, the non-secured portion should be configured to enable protecting the trust key and the secure portion should be configured to enable deriving from the protected trust key the trust key to be stored in the secure portion.

An example of securing the transfer of the trust key from the non-secure portion to the secure portion of the device is the use of white box cryptography. White box cryptography is described in "White-Box Cryptography and an AES Implementation", by Stanley Chow, Philip Eisen, Harold Johnson, and Paul C. Van Oorschot, in Selected Areas in Cryptography: 9th Annual International Workshop, SAC 2002, St. John's, Newfoundland, Canada, Aug. 15-16, 2002, and "A White-Box DES Implementation for DRM Applications", by Stanley Chow, Phil Eisen, Harold Johnson, and Paul C. van Oorschot, in Digital Rights Management: ACM CCS-9 Workshop, DRM 2002, Washington, D.C., USA, Nov. 18, 2002, and are incorporated by reference in the present application in its entirety. The basic idea of white-box cryptography is to hide a key, or a portion thereof, by obscuring the key or the portion thereof in lookup tables Lₙ. A sequence of lookup operations implements the function of a white box implementation module.

In an embodiment, the trust key as disclosed in the present application can be secured by this technique. White box crypto generally includes the use of transformation functions, i.e. bijection functions. In mathematical form, the decryption function D can be written as D = **Lo∘L₁∘L₂∘...∘Lₙ(x)**, wherein Lₙ is a table lookup operation. By combining this with random input and output transformation functions F, G, the function D'₌F⁻¹∘D ∘G can implemented. In the embodiment, input information for the non-secured portion of the device is locally transformed by the smart card, thereby obviating the need for receiving transformed input information from a head end. The transformed input is sent to the non-secure portion of the device for performing the white box cryptography.

In an embodiment of the invention, the output of the white box crypto operation is a transformed output and the function for detransforming the output is implemented in the secured portion of the device. In other words, the white box cryptographic operation is extended into the secured portion of the device and the smart card, thereby complicating extracting the trust key from the non-secured portion of the device. The hardware implemented final transformation constitutes a hardware anchor. Whereas the key exchange algorithm operations can be done entirely in the non-secured portion of the device (reducing the amount of hardware elements and/or modifications in the secure portion), the transformed trust key output only has a meaning for the secured portion containing the final transformation function for deriving the trust key to be stored there. The white box cryptography instance is useless in another receiver with an inverse transform for a different final transform.

It may be desired to change the key under which the data transfer between the smart card and the device is protected now and then. Changing the key may e.g. be invoked when the device/receiver is rebooted or the smart card is extracted from the device. Also, a head end may have provided instructions for cycling the key. Although the trust key may be used for protecting data, such as control words, when transferred over the interface between the smart card and the device, the establishment of a new trust key requires performing a key exchange algorithm, which takes some time (primarily because of the limited computing resources of the smart card). Therefore, in order to be able to change the key under which the data is protected more rapidly, in the embodiment of the invention as defined in claim 5, the device and the smart card may agree on a further key for the actual data transfer protection. In an embodiment of the invention, the further key may be generated either in the smart card or in the secure portion of the device and transferred to the device, respectively, the smart card encrypted under the already established trust key. The further key is established locally, i.e. at the side of the device or smart card and not at the head end, and can be cycled at a higher rate than the trust key.

As mentioned above, in an embodiment of the invention, the device is a receiver receiving encrypted content data. The secured portion of the receiver is configured for decrypting the encrypted content data and forwarding the decrypted content data in the direction of a rendering device. The decryption of the content data is performed under the control of the encrypted data (control words encrypted under the trust key or the further key mentioned above) transferred from the smart card to the receiver, more precisely to the secured portion of the receiver, where the encrypted data is decrypted (but not externally accessible) and available for the decryption of the content data.

The electronic device may be arranged such that a unique key is stored in the secured portion, wherein the device is configured for transmitting the trust key to a head end encrypted under the unique key. The chip set of the secure portion of the device contains a chip set unique key CSUK. In an embodiment of the invention, the head end from which the content data is received may be informed of the trust key established between the smart card and the device, by sending the trust key to the head end encrypted under the unique key. As mentioned under the background section, the head end typically has access to the unique key stored in the secured portion of the device and is therefore able to derive the trust key.

Hereinafter, embodiments of the invention will be described in further detail. It should be appreciated, however, that these embodiments may not be construed as limiting the scope of protection for the present invention.

### BRIEF DESCRIPTION OF THE DRAWINGS

In the drawings:
FIG. 1 is a diagram schematically illustration a method according to a first embodiment of the invention;
FIG. 2 is a diagram schematically illustration a method according to a second embodiment of the invention;
FIG. 3 is a schematic illustration of a device-smart card combination implementing the method illustrated in FIG. 1;
FIG. 4 is a diagram illustrating the application of transformation functions in relation to encryption;
FIG. 5 is a schematic illustration of a device-smart card combination implementing the method illustrated in FIG. 2; and
FIG. 6 is a schematic illustration of a device-smart card combination enabling secure data transfer.

### DETAILED DESCRIPTION OF THE DRAWINGS

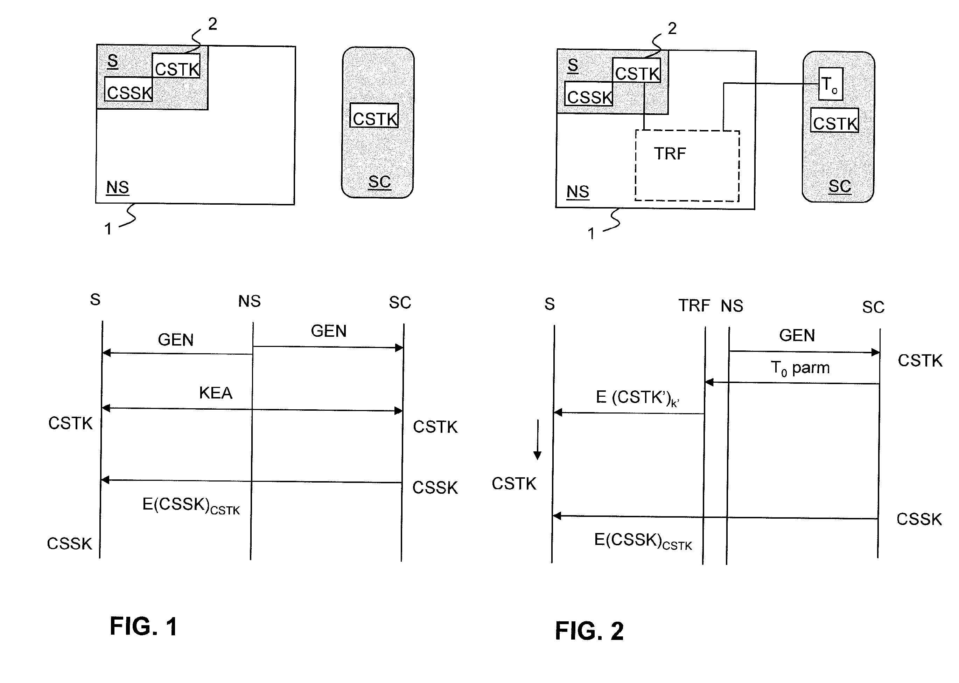

FIG. 1 shows a schematic illustration of an electronic device 1 and a smart card SC that can be brought into operative contact in a manner knows as such. The electronic device 1 may e.g. be a receiver for a set-top box or a mobile phone. The smart card SC may e.g. be a dedicated smart card for insertion into the set-top box or a SIM card of a mobile phone.

Secured portions of the electronic device and the smart card SC are indicated in grey.

The electronic device 1 comprises a secured portion S and a non-secured portion NS. The secured portion S comprises a memory 2 for secure storage of data, such as a trust key CSTK and a session key CSSK, that will be described in further detail below. The secured portion S is a dedicated part of the device 1 containing hardware elements not allowing access by means of read/write operations of data from outside the secured portion S and only allowing data transfer with non-secure portions NS of the receiver in encrypted form. An example of a secure portion S is a secure crypto-engine. Functions realized in the secured portion are also generally implemented as hardware elements. The smart card SC is completely secured.

When the electronic device 1 and the smart card SC are brought in operative contact, the electronic device 1 detects the operative contact and signals GEN are issued, e.g. automatically, from the non-secured portion NS to the smart card SC and to the secure portion S to perform a key exchange algorithm KEA. Key exchange algorithms are described in the book Applied Cryptography, ISBNO-471-12845-7, by Bruce Schneier, incorporated in the present application by reference. Key exchange algorithms includes Diffie-Hellman (DH) algorithms, elliptic curve DH algorithms etc.

Signals GEN may be combined in a certification verification procedure and may load parameters and other data for use during the key exchange algorithm.

Part of the key exchange algorithm may include the exchange of public keys for establishing the trust key CSTK between the secure portion S and the smart card SC. The public key exchange for establishing the trust key CSTK may be strengthened using further public-private key encryption techniques.

The KEA functionality implemented in the electronic device 1 and the smart card SC, enables the smart card SC and the electronic device 1 to locally agree on the trust key CSTK once the smart card SC and the electronic device 1 are brought into operative contact without the need for contacting another party. The trust key CSTK can be used for secure data transfer between a smart card and a receiver, such as securely providing control words encrypted under the trust key CSTK as will be described in further detail below. By storing the trust key CSTK in the secured portion S of the device 1, data from the smart card SC can be transferred, encrypted under the trust key CSTK, from the smart card SC directly into the secured portion S of the electronic device 1 without being exposed in unencrypted form in the non-secured portion NS of the device 1. Since external access to the secured portion S of the device 1 and to the smart card SC is virtually impossible, the trust key CSTK cannot be obtained from the device 1 and data, such as control words, can be safely transferred to this secured portion S under the trust key CSTK.

Now that the device 1 and the smart card SC have established a trust key, the smart card SC may generate a further key CSSK for the actual protection of the data. If the smart card SC generates the further key CSSK, the trust key CSTK can be used for encrypting the further key CSSK by any known encryption algorithm E and send this further key CSSK to the secured portion S of the device 1 as shown in FIG. 1. In the secured portion S, the encrypted message can be decrypted using a decryption algorithm and the stored key CSTK in order to derive CSSK. From now on, data can be transferred under the further key CSSK with the same level of protection as under CSTK. Establishing CSSK is faster than establishing CSTK using the key exchange algorithm KEA, thereby facilitating more rapid CSSK key cycling for data encryption between the smart card SC and the secured portion S of device 1. Further key CSSK is also stored in memory 2 of the secured portion S.

Of course, in an alternative embodiment, the further key CSSK is generated in the secured portion S and transferred to the smart card SC encrypted under the trust key CSTK.

FIG. 2 provides a schematic illustration of an alternative embodiment of the invention, wherein the key exchange algorithm is performed using the non-secured portion NS of the device 1. This may be advantageous as it may avoid the need for adding and/or adapting hardware elements in the secured portion S of the device 1. In the embodiment of FIG. 2, use is made of a transformation domain TRF in the non-secured portion NS of the device 1.

When operative contact between the smart card SC and the device 1 is established, the transformation domain TRF receives a transformed input (e.g. a transformed public key), generated locally at the smart card SC using transformation function T₀ for providing input for the key exchange algorithm part at the side of the device 1. Furthermore, information (e.g. a public key) is provided from the device 1 to the smart card SC (signal GEN) for performing the key exchange algorithm at the side of the smart card SC. In the transformation domain, white box cryptography is applied on the transformed input in order to generate a transformed trust key CSTK'. The transformed trust key CSTK' is sent to the secure portion S of the device 1 in protected, possibly encrypted, form E using a transformed version of a key k' also known in the secured portion S. In the secured portion S, the trust key CSTK is derived from CSTK' using a decryption algorithm and a detransformed version of the key k'.

Again, as for the embodiment of FIG. 1, a further key CSSK may be used for the actual data exchange protection between the smart card SC and the device 1.

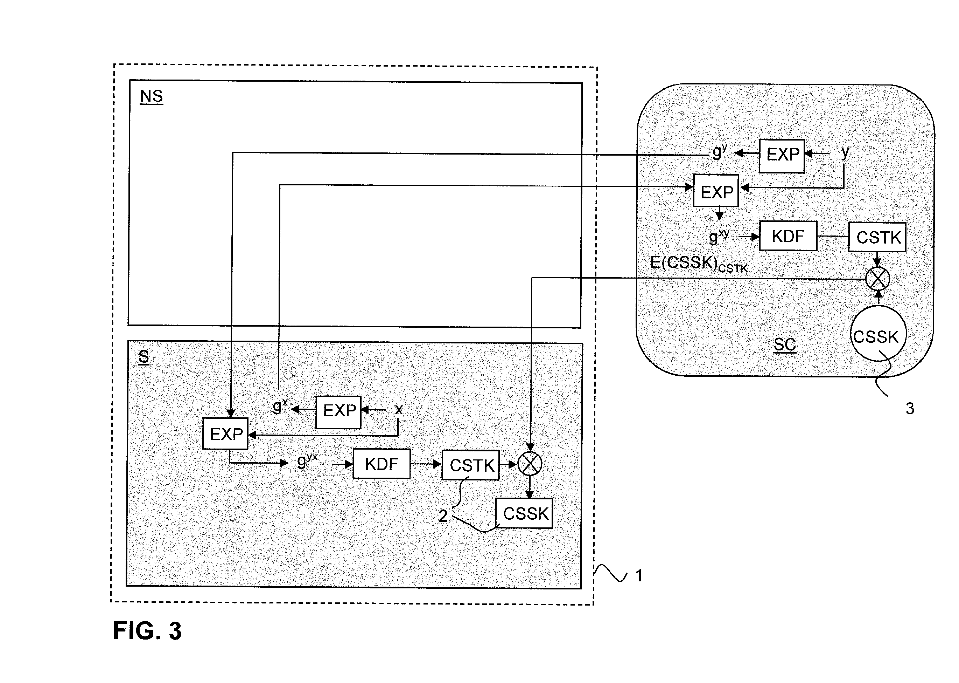

FIG. 3 is a schematic illustration of an implementation of the embodiment of FIG. 1, wherein a Diffie-Hellman (DH) protocol is applied as key exchange algorithm KEA. In the description, the modulo part of DH is ignored for clarity reasons. The DH protocol is completely performed within the secure portion S of the device 1 and in the smart card SC, i.e. entirely in the secure domain.

At the side of the device 1, a nonce x is generated in the secured portion S by a true random number generator after establishing operative contact between the smart card SC and the device 1. Furthermore, Diffie-Hellman parameter g is set as a large prime and a public key g^{x} is obtained. Public key g^{x} is transmitted to the smart card SC, possibly signed with a private key of the device 1.

At the side of the smart card SC, a nonce y is generated by a true random number generator after establishing operative contact with the device 1. Pre-personalised Diffie-Helman parameter g is applied and public key g^{y} is sent to the secured portion S of the device 1, possibly signed with a private key of the smart card SC.

Then, at both sides, the value g^{xy} or g^{yx} is calculated and a key derivation function KDF is applied to obtain the trust key CSTK. At the side of the device 1, the trust key is stored in the secure portion S. Data transfer between the smart card SC and the device 1 can now be encrypted under the trust key CSTK.

Again, as described with reference to FIG. 1, a further key CSSK can be obtained for protecting the data exchange. Smart card SC contains a key generator 3 for generating CSSK. The further key CSSK can be communicated to the secured portion S by sending a message containing encrypted CSSK at the smart card using an encryption algorithm C and the trust key CSTK and by decrypting the message using CSTK from memory 2 to obtain CSSK.

As described above with reference to FIG. 2, the trust key CSTK can also be safely obtained and stored in the secured portion S of the device 1, while performing the key exchange algorithm KEA in the non-secured portion NS by defining a transformed domain in the non-secure portion NS.

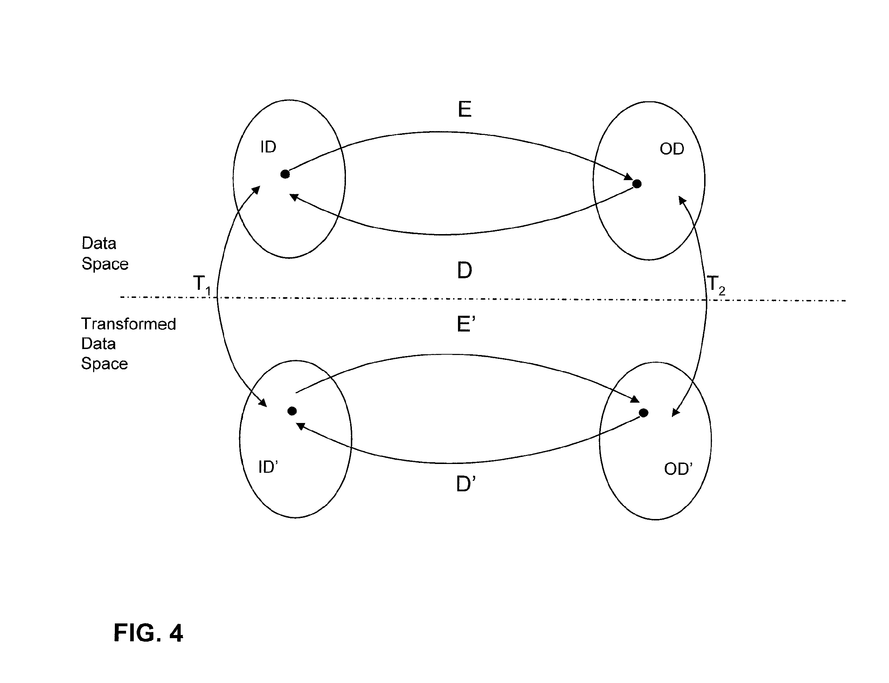

The concept of transformed domains and transformation functions is illustrated with reference to FIG. 4.

Assume, there exists an input domain ID with a plurality of data elements in a non-transformed data space. An encryption function E using some key is defined that is configured to accept the data elements of input domain ID as an input to deliver a corresponding encrypted data element in an output domain OD. By applying a decryption function D, the original data elements of input domain ID can be obtained by applying the decryption function D to the data elements of output domain OD.

In a non-secure environment, an adversary is assumed to be able to control the input and output data elements and the operation of the implementation of the encryption function E, in order to discover the confidential information (such as keys) that is embedded in the implementation.

Additional security can be obtained in such a non-secured environment by applying transformation functions to the input domain ID and output domain OD, i.e. the transformation functions are input- and output operations. Transformation function T1 maps data elements from the input domain ID to transformed data elements of transformed input domain ID' of a transformed data space. Similarly, transformation function T2 maps data elements from the output domain OD to the transformed output domain OD'. Transformed encryption and decryption functions E' and D' can now be defined between ID' and OD' using transformed keys. T1 and T2 are bijections.

Using transformation functions T1, T2, together with encryption techniques implies that, instead of inputting data elements of input domain ID to encryption function E to obtain encrypted data elements of output domain OD, transformed data elements of domain ID' are input to transformed encryption function E' by applying transformation function T1. Transformed encryption function E' combines the inverse transformation functions T1⁻¹ and/or T2⁻¹ in the encryption operation to protect the confidential information, such as the key. Then transformed encrypted data elements of domain OD' are obtained. By performing T1 and/or T2 in a secured portion, keys for encryption functions E or decryption function D can neither be retrieved when analysing input data and output data in the transformed data space nor when analysing the white box implementation of E' and/or D'.

One of the transformation functions T1, T2 should be a non-trivial function. In case, T1 is a trivial function, the input domains ID and ID' are the same domain. In case, T2 is a trivial function, the output domains are the same domain.

In white box cryptology, it is assumed that the processing in the transformed data space is under full control of an adversary. Un this assumption, an adversary has access to the data elements in ID', OD' and the white box implementations of the functions E' and/or D'. White box cryptology provides security by securing (parts of) the keys for the functions E and D. By applying transformation functions T1 and T2 in at least one of the smart card and the secured portion S of the device 1, the lookup tables Lₙ as described previously cannot be resolved in the transformed space as this requires knowledge of T1 and/or T2.

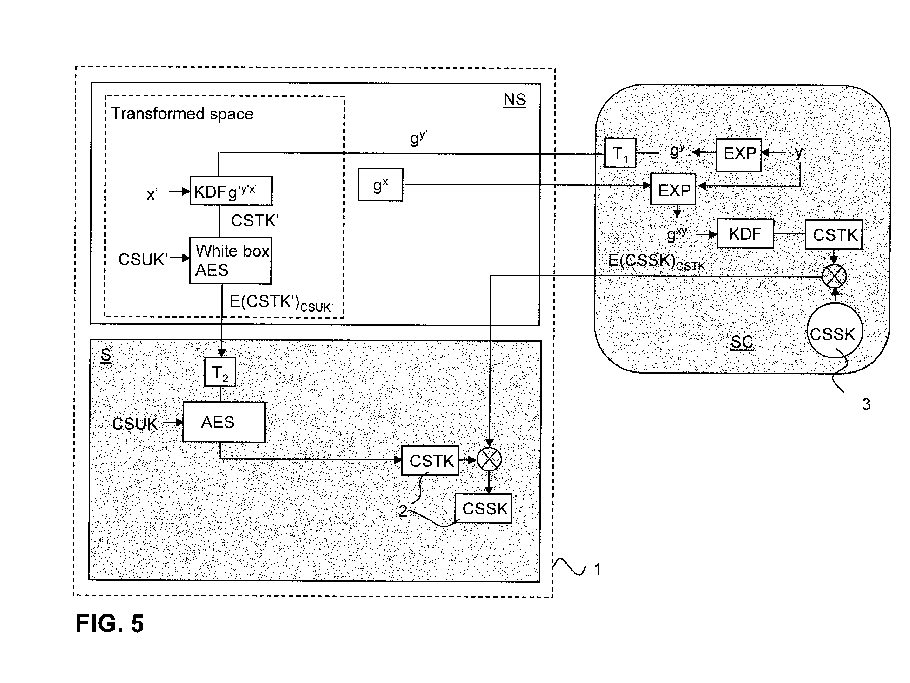

An implementation of such an embodiment using a DH key exchange algorithm is schematically illustrated in FIG. 5.

In the device 1, public key g^{x} is fed to the smart card SC, possibly signed with a private key of the device 1. The public key g^{x} is received at the smart card SC.

At the smart card SC, a random number y and a public key g^{y} is generated. Public key g^{Y} from the smart card can be used within the smart card together with the received public key g^{x} to obtain g^{xy} and to derive trust key CSTK after applying a key derivation function KDF.

As opposed to the embodiment of FIG. 3, public key g^{y} is not transmitted directly to device 1, but is first transformed at the smart card SC using transformation function T1 as explained previously with reference to FIG. 4. Transformed g^{y}' is then transmitted to the device 1 where it is received in the transformed space of the non-secured portion NS of device 1. A DH transformed secret x' and a transformed version CSUK' of a unique key CSUK of the secured portion are embedded in the transformed space of the non-secured portion NS of the device 1. Applying the Diffie-Hellman algorithm in the transformed space, using transformed secret x', a transformed trust key CSTK' is obtained. CSTK' is transferred to the secured portion S of device 1 in protected form, using both transformation T2 and a white box implementation of AES using transformed key CSUK'. There, CSTK is obtained by transformation T2 and decryption process AES under the control of the unique key CSUK of the secured portion S. CSTK can be stored in memory 2 of the secured portion S.

It should be noted that transformation function T2 is not necessarily applied or can be a trivial function in the embodiment of FIG. 5, since the white box encryption under key CSUK' ensures protection of the trust key for transfer from the non-secure portion NS to the secured portion S of the device 1.

Of course, the white box encryption can also be omitted in favour of the application of transformation function T2.

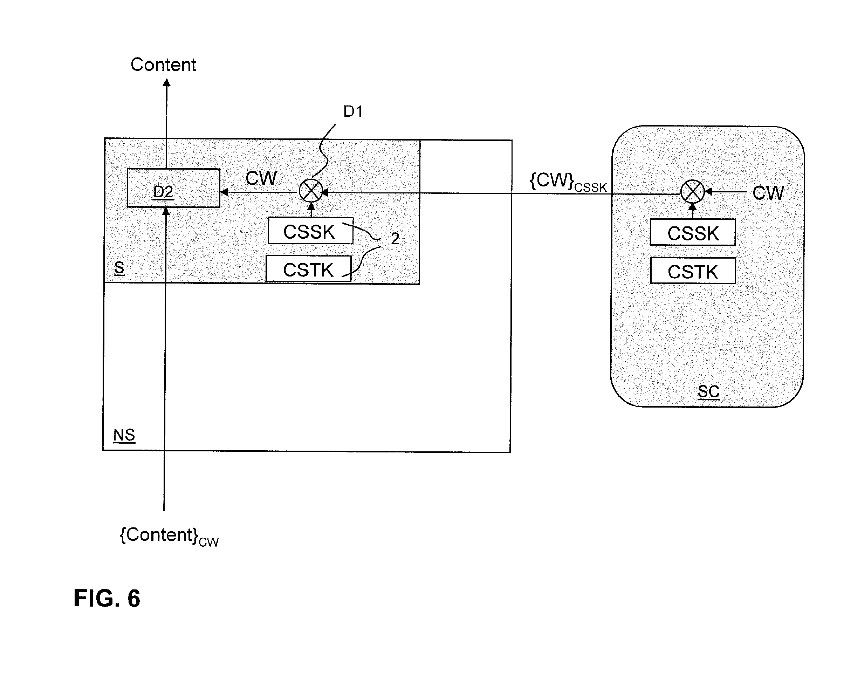

Finally, FIG. 6 provides a schematic illustration wherein data (here control words CW) to be transferred from the smart card SC to the device 1 can be transferred directly to the secure portion S of the device 1 without being exposed in the non-secure portion NS in unencrypted form. Control words are obtained within the smart card SC in a manner known as such. Assuming that the trust key CSTK has been established and that a further key CSSK has been agreed between the device 1 and the smart card SC in a manner as described above, the control words CW can now be encrypted under the further key CSSK in the smart card SC and transmitted in encrypted form to the device 1, passing the non-secure portion NS in encrypted form and decrypted in the secured portion S using a first decrypter D1, thereby obtaining the control words CW.

The control words CW are fed to a second decrypter D2, e.g. a secure crypto processor, receiving content encrypted under the control words CW in order to decrypt the encrypted content in a manner known as such and forward the decrypted content in the direction of a rendering device.

One embodiment of the invention may be implemented as a program product for use with a computer system. The program(s) of the program product define functions of the embodiments (including the methods described herein) and can be contained on a variety of computer-readable storage media. Illustrative computer-readable storage media include, but are not limited to:
(i) non-writable storage media (e.g., read-only memory devices within a computer such as CD-ROM disks readable by a CD-ROM drive, ROM chips or any type of solid-state non-volatile semiconductor memory) on which information is permanently stored; and (ii) writable storage media (e.g., floppy disks within a diskette drive or hard-disk drive or any type of solid-state random-access semiconductor memory, flash memory) on which alterable information is stored.

## Claims

1. An electronic device configured for encrypted data transfer with a smart card under a trust key, the device comprising at least one secured portion, wherein the device is configured for performing a key exchange algorithm with the smart card for establishing the trust key for the encrypted data transfer between the device and the smart card and wherein the device is configured for storing the trust key in the secured portion of the device.

2. The electronic device according to claim 1, wherein the secured portion is configured for performing at least a portion of the key exchange algorithm in the device.

3. The electronic device according to claim 1, wherein the device comprises at least one non-secured portion, wherein the non-secured portion is configured for performing the key exchange algorithm in the device and wherein the device is configured for transferring a protected trust key from the non-secured portion to the secured portion, wherein the secured portion is configured for deriving from the protected trust key the trust key to be stored in the secured portion.

4. The electronic device according to claim 3, wherein the non-secured portion is configured for receiving a transformed input for the key exchange algorithm from the smart card for performing the key exchange algorithm and for protecting the trust key using white box cryptography.

5. The electronic device according to claim 3 or 4, wherein the white box cryptography is arranged for providing a transformed output from the non-secured portion to the secured portion, the transformed output comprising a transformed trust key, wherein the secured portion of the device contains a transformation function capable of deriving from the transformed trust key the trust key to be stored in the secured portion.

6. The electronic device according to one or more of the preceding claims, wherein the device is further configured agreeing a further key with the smart card, the device being configured for at least one of:
- receiving in the secured portion the further key encrypted under the trust key and decrypting the encrypted further key to derive the further key in the secured portion using the stored trust key; and
- generating the further key, encrypting the further key using the stored trust key and transmitting the encrypted further key to the smart card.

7. The electronic device according to one or more of the preceding claims, wherein the device comprises a content receiver receiving encrypted content, wherein the secured portion comprises:
- a first decrypter configured for decrypting the encrypted data from the smartcard using the trust key stored in the secured portion or the further key of claim 6;
- a second decrypter configured for decrypting the encrypted content using the decrypted data.

8. A method for establishing a trust key between a device and a smart card, the device comprising a secured portion, the method comprising the steps of:
- performing a key exchange algorithm between the device and the smart card to obtain the trust key in the device and the smart card; and
- storing the trust key in the secured portion of the device.

9. The method according to claim 8, further comprising the step of performing the key exchange algorithm for the device in the secured portion of the device.

10. The method according to claim 8, wherein the device comprises a non-secured portion, the method comprising the steps of:
- performing the key exchange algorithm for the device in the non-secured portion of the device to obtain the trust key; and
- transferring the trust key from the non-secured portion to the secured portion in protected form.

11. The method according to claim 10, further comprising the steps of:
- receiving a transformed input for the key exchange algorithm from the smart card in the non-secured portion, and
- protecting the trust key using white box cryptography.

12. The method according to claim 10 or 11, further comprising the steps of;
- providing a transformed output from the non-secured portion to the secured portion, the transformed output comprising a transformed trust key,
- applying a transformation function in the secured-portion of the device for deriving the trust key to be stored in the secured portion.

13. The method according to one or more of the claims claim 8-12, further comprising the steps of:
- transferring data encrypted under the trust key to the secured portion of the device;
- decrypting the data in the secured portion of the device using the stored trust key.

14. The method according to claim 13, further comprising the steps of:
- generating a further key in the smart card or the device;
- transferring the further key to the device or the smart card encrypted under the trust key; and
- transferring data between the smart card and the trust key under the further key.

15. A smart card for use in combination with the electronic device of one or more of the claims 1-7 or in the method of one or more of the claims 8-14.
